(19) Europäisches Patentamt
European Patent Office
Office européen des brevets

(11) **EP 2 717 228 B1**

(12) **FASCICULE DE BREVET EUROPEEN**

(45) Date de publication et mention de la délivrance du brevet:
**05.07.2017 Bulletin 2017/27**

(51) Int Cl.:
***G06T 19/00*** *(2011.01)*

(21) Numéro de dépôt: **13186004.1**

(22) Date de dépôt: **25.09.2013**

(54) **Système de visualisation pour aéronef, et procédé de visualisation associé**

Visualizierungssystem für Flugzeuge und entsprechendes Verfahren

Visualization system for aircraft and corresponding method

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **05.10.2012 FR 1202674**

(43) Date de publication de la demande:
**09.04.2014 Bulletin 2014/15**

(73) Titulaire: **Dassault Aviation**
**75008 Paris (FR)**

(72) Inventeurs:
• **Baudson, Olivier**
**75017 PARIS (FR)**
• **Turpin, Arnaud**
**92100 BOULOGNE (FR)**

(74) Mandataire: **Lavoix**
**2, place d'Estienne d'Orves**
**75441 Paris Cedex 09 (FR)**

(56) Documents cités:
**WO-A1-2011/039666     US-A1- 2010 295 937**

• **GLORIA L CALHOUN* A ET AL: "Synthetic vision system for improving unmanned aerial vehicle operator situation awareness", mai 2005 (2005-05), ENHANCED AND SYNTHETIC VISION, SPIE, PAGE(S) 219 - 230, XP009168010, ISBN: 0-8194-5787-6 section 3.2.3; * abrégé; figure 6 ***
• **MOLLER H ET AL: "Synthetic vision for enhancing poor visibility flight operations", IEEE AEROSPACE AND ELECTRONIC SYSTEMS MAGAZINE, IEEE SERVICE CENTER, PISCATAWAY, NJ, US, vol. 9, no. 3, mars 1994 (1994-03), pages 27-33, XP011414384, ISSN: 0885-8985, DOI: 10.1109/62.275379**

EP 2 717 228 B1

## Description

La présente invention concerne un système de visualisation hybride pour un aéronef selon le préambule de la revendication 1.

Un tel système est destiné à être implanté dans le cockpit d'un aéronef pour être associé à un afficheur du cockpit. L'afficheur est par exemple un afficheur au moins partiellement transparent, tel qu'un écran semi-transparent placé devant un pare-brise du cockpit, un système de projection d'images sur le pare-brise du cockpit, un pare-soleil semi-transparent, un viseur de casque, une lunette semi-transparente proche de l'oeil.

En variante, l'afficheur constitue un écran tête basse intégré dans le tableau de bord du cockpit.

Pour faciliter le pilotage de l'aéronef, et donner au pilote une indication globale sur la structure du terrain situé en regard de l'aéronef, il est connu de générer des images synthétiques du paysage situé à l'avant de l'aéronef, à partir notamment de bases de données topographiques, en fonction de la position courante de l'aéronef déterminée par le système de navigation de l'aéronef.

Les images synthétiques sont représentatives de l'environnement situé à l'avant de l'appareil, tel qu'il peut être observé à travers le pare-brise par un pilote dans le cockpit. Ces images synthétiques comprennent généralement une représentation synthétique surfacique du terrain.

Un tel système de visualisation permet au pilote de se représenter le relief qui peut se trouver devant l'aéronef, notamment lorsque la visibilité est faible ou nulle.

De tels systèmes de visualisation fournissent une aide substantielle au pilote, mais s'avèrent parfois imprécis, compte tenu des erreurs possibles dans le positionnement de l'aéronef, et/ou dans les données topographiques disponibles dans les bases de données. Il est donc nécessaire de disposer en parallèle d'une vision réelle de l'environnement se situant à l'extérieur de l'aéronef.

Pour ce faire, des systèmes de visualisation améliorée (« Enhanced Vision Systems ou « EVS » en anglais) ont été développés.

Ces systèmes comprennent généralement une caméra embarquée dans le nez de l'aéronef. La caméra, qui comporte par exemple des capteurs fonctionnant dans l'infrarouge, améliore la visibilité à l'avant de l'aéronef, en détectant le terrain et toutes les structures présentes sur le terrain comme par exemple des lumières présentes sur la piste ou autour de la piste, en particulier les éclairages des rampes d'approche.

Sur la base des données d'image collectées par la caméra, une image réelle de l'environnement présent à l'avant de l'aéronef est obtenue.

De tels systèmes de visualisation permettent donc de confirmer la position de la piste par rapport à l'aéronef et/ou par rapport à l'environnement, et facilitent la décision du pilote lorsqu'il atteint l'altitude de décision, à laquelle il doit choisir de poursuivre ou non l'atterrissage.

Des systèmes de visualisation hybrides ont par ailleurs été développés. Ces systèmes affichent à la fois une première région comprenant une image totalement synthétique, et une deuxième région comprenant une image réelle obtenue à partir d'un système de vision amélioré comprenant une caméra infrarouge.

Dans des systèmes connus, l'afficheur comporte une région centrale, dans laquelle les données provenant du capteur de vision amélioré sont intégrées, et une région périphérique, dans laquelle une image synthétique est affichée.

Un tel système facilite le pilotage de l'appareil, dans de bonnes conditions de visibilité. Toutefois, lorsque la visibilité est plus faible, l'affichage dans la fenêtre centrale est de moindre qualité, ce qui peut rendre difficile l'appréciation par le pilote du contenu de l'image présente sur une grande partie de l'écran.

WO 2011/039 666 décrit un système de visualisation combinant une image réelle d'un terrain et des informations synthétiques.

Un but de l'invention est donc d'obtenir un système de visualisation pour un aéronef, qui associe des images synthétiques à une vision réelle, tout en offrant la meilleure qualité d'information au pilote par rapport aux conditions dans lesquelles évolue l'aéronef.

A cet effet, l'invention a pour objet un système selon la revendication 1.

Le système selon l'invention peut comprendre l'une ou plusieurs des caractéristiques des revendications 2 à 11.

L'invention a également pour objet un procédé de visualisation dans un aéronef, selon la revendication 12.

Le procédé selon l'invention peut comprendre l'une ou plusieurs des caractéristiques des revendications 13 à 15.

L'invention sera mieux comprise à la lecture de la description qui va suivre, donnée uniquement à titre d'exemple, et faite en se référant aux dessins annexés, sur lesquels :

- la figure 1 est une vue schématique d'un système de visualisation d'aéronef selon l'invention ;
- la figure 2 est une vue schématique d'un cockpit dans lequel le système de visualisation est mis en oeuvre ;
- la figure 3 est une vue d'un afficheur du système de la figure 1, dans une première configuration d'affichage dans laquelle une image synthétique occupe sensiblement la totalité de l'écran ;
- la figure 4 est une vue schématique de l'évolution de l'aéronef lors de la première configuration ;
- la figure 5 est une vue analogue à la figure 3, dans une deuxième configuration d'affichage dans laquelle une première région de l'afficheur comporte une image synthétique et une deuxième région est sensiblement dépourvue de représentation synthétique surfacique du terrain ;

- la figure 6 est une vue de l'évolution de l'aéronef dans la deuxième configuration ;
- la figure 7 est vue analogue à la figure 3, dans une troisième configuration d'affichage ;
- la figure 8 est une vue analogue à la figure 4, de l'évolution de l'aéronef dans la troisième configuration ;
- la figure 9 est une vue en perspective partielle, d'une manette de commande d'aéronef, équipée d'un organe de réglage de luminosité ;
- la figure 10 est une vue de dessus de l'aéronef lors de son évolution ;
- la figure 11 est une vue analogue à la figure 6, illustrant une variante de mise en oeuvre d'un procédé selon l'invention ;
- la figure 12 est une vue analogue à la figure 5, illustrant une autre variante de mise en oeuvre du procédé selon l'invention.

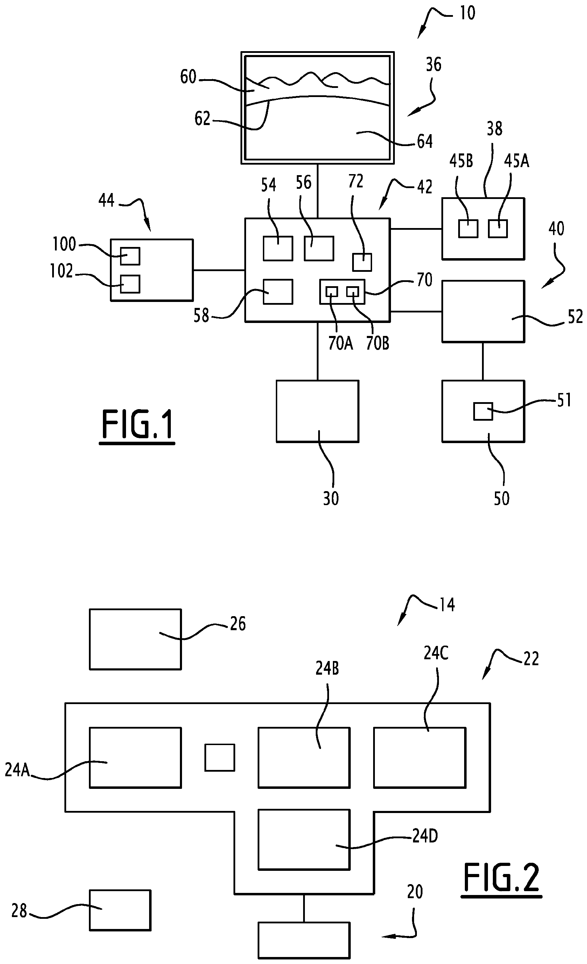

Un premier système 10 de visualisation pour un aéronef 12 selon l'invention est illustré schématiquement par la figure 1.

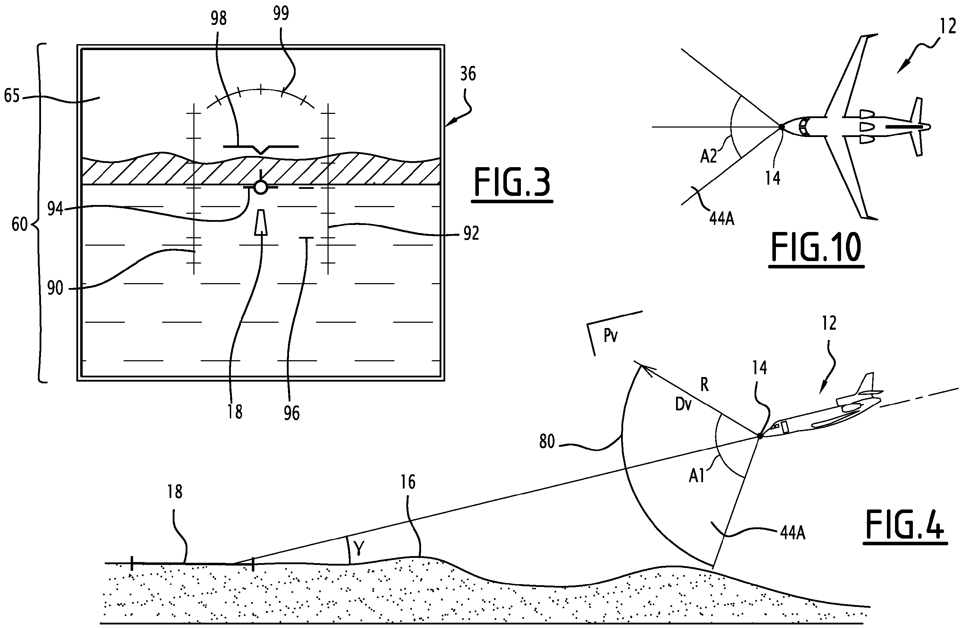

Ce système 10 est destiné à être monté dans un aéronef 12 visible schématiquement sur la figure 4, pour permettre l'affichage d'informations sur un afficheur présent dans le cockpit 14 de l'aéronef représenté schématiquement sur la figure 2.

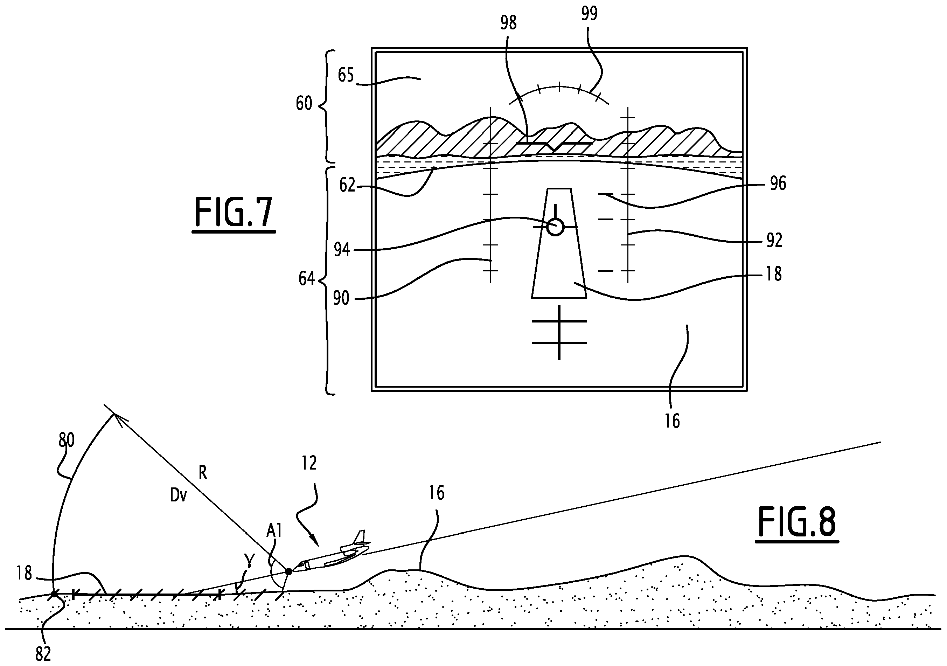

Le système 10 est destiné à assister le pilote de l'aéronef pour se représenter le terrain 16 situé en regard de l'aéronef 12, comme par exemple au voisinage d'une piste d'atterrissage 18 présente sur le terrain 16 (visible sur la figure 7). Plus généralement, le système 10 s'applique à d'autres phases de vol, par exemple au décollage ou en croisière.

En référence à la figure 2, le cockpit 14 est muni d'un système principal d'affichage 22 raccordé à une unité centrale d'avionique 20.

Le système principal 22 permet à l'équipage de piloter l'aéronef, de gérer sa navigation, de surveiller et commander les différents systèmes fonctionnels présents dans l'aéronef. Le système 22 comporte une planche de bord munie d'une pluralité d'écrans de base 24A à 24D formant des afficheurs tête basse.

Dans cet exemple, le cockpit 14 est aussi avantageusement muni d'un écran semi-transparent tête haute 26, placé en regard du pare-brise.

Le cockpit 14 est par ailleurs muni d'un organe de commande 28 du pilotage de l'aéronef, tel qu'une manette ou un manche.

De manière connue, les écrans de base 24A et 24C sont par exemple des écrans primaires d'affichage destinés à l'affichage de paramètres de vol de l'aéronef. Les écrans de base 24B et 24D sont par exemple des écrans multifonctionnels de navigation et/ou de suivi et de commande des systèmes d'avionique.

Le système d'affichage principal 22 est muni d'un ensemble de gestion d'affichage (non représenté) propre à afficher les différentes fenêtres présentes sur ces écrans 24A à 24D.

L'unité centrale d'avionique 20 est raccordée à un système 30 de mesure et de positionnement spatial de l'aéronef 12.

Le système 30 de mesure et de positionnement comporte par exemple des capteurs de mesure de paramètres extérieurs à l'aéronef tel que la température, la pression ou la vitesse, des capteurs de mesure de paramètres internes à l'aéronef et à ses différents systèmes fonctionnels, et des capteurs de positionnement, tel que des capteurs GPS , des centrales à inertie, ou/et un altimètre.

Les capteurs de positionnement sont propres à fournir une information sur la position géographique de l'aéronef, sur sa vitesse, son cap et son attitude (assiette longitudinale, angle de roulis).

En référence à la figure 1, le système de visualisation 10 selon l'invention est raccordé au système 30 de mesure et de positionnement. Il est avantageusement raccordé à l'unité centrale d'avionique 20.

Le système de visualisation 10 comporte au moins un afficheur 36, un ensemble 38 de génération d'images synthétiques, et avantageusement, un ensemble 40 de génération d'images réelles.

Il comporte également un ensemble 42 de gestion de l'interface graphique de l'afficheur 36 raccordé à chacun des ensembles 38, 40 et au système de positionnement 30.

Le système 10 comporte en outre une interface homme/machine 44 pour le réglage des paramètres de l'affichage sur l'afficheur 36.

L'afficheur 36 est par exemple un des écrans 24A à 24B ou/et est l'écran semi-transparent tête haute 26 du cockpit 14. Dans d'autres variantes, l'afficheur 36 est par exemple un système de projection d'images sur le pare-brise du cockpit, un pare-soleil semi-transparent, un viseur de casque, ou une lunette semi-transparente proche de l'oeil.

Dans un premier mode de réalisation, qui sera décrit par la suite, l'afficheur 36 du système de visualisation 10 selon l'invention est l'écran semi-transparent tête haute du cockpit 14.

Dans ce cas, l'afficheur 36 est propre à être rendu partiellement transparent pour autoriser la visualisation de l'environnement situé à l'avant de l'afficheur 36 par transparence. L'afficheur 36 est propre à être rendu au moins partiellement opaque par l'affichage d'images synthétiques ou d'images réelles générées par l'un des ensembles de génération 38, 40, et fournies par l'ensemble de gestion 42, comme cela sera décrit plus bas.

Les dimensions de l'afficheur 36 correspondent à un volume d'observation 44A dans l'espace situé à l'avant de l'aéronef 12, défini sensiblement par une pyramide.

En référence à la figure 4 et à la figure 10, le volume d'observation 44A présente un angle d'ouverture vertical, suivant un plan axial vertical de l'aéronef 12 égal à A1 et un angle d'ouverture horizontal égal à A2 suivant un plan axial horizontal de l'aéronef, dans un repère lié à l'aéronef 12.

L'angle d'ouverture A1 est défini en excluant les régions du terrain 16 non visibles par le pilote du fait de la structure du cockpit et de l'assiette longitudinale de l'aéronef 12.

L'ensemble 38 de génération d'images synthétiques est raccordé à l'ensemble de gestion 42. Il comporte une mémoire et un processeur.

Il comporte au moins une base de données 45A contenue dans la mémoire comprenant des données topographiques associées au terrain au dessus et à l'avant duquel évolue l'aéronef 12.

Il comporte en outre un module 45B de génération d'images propre à engendrer dynamiquement des images synthétiques du terrain situé en regard et à l'avant de l'aéronef, sur la base de la position géographique courante de l'aéronef 12, de son attitude (notamment cap, assiette longitudinale, angle de roulis, lacet), telles que déterminées à l'aide du système de positionnement 30 et sur la base des données topographiques issues d'au moins une des base de données 45A.

A cet effet, la ou les bases de données 45A sont choisies parmi des bases de données de terrain, d'obstacles, des bases de données de navigation, des bases de données géopolitiques, des bases de données d'utilisation d'espace aérien, des bases de données de type de terrain (étendues et cours d'eau, zones terrestres etc.)

Le module 45B est ainsi propre à engendrer, à chaque instant donné, une image synthétique surfacique qui correspond à une représentation visuelle de l'environnement qui pourrait être observé par le pilote à travers le pare-brise à cet instant donné, lorsque l'aéronef occupe une position géographique et une attitude donnée.

L'image synthétique est propre à couvrir partiellement le volume d'observation 44A défini par les dimensions de l'afficheur 36.

Elle forme en particulier une représentation synthétique surfacique du terrain présent à l'avant de l'aéronef et de son relief.

Cette représentation, en deux dimensions sur l'afficheur 36, comporte au moins des régions de l'afficheur 36 sous forme de surfaces remplies qui correspondent à des zones de terrain et/ou au relief présent sur ces zones.

L'image synthétique du terrain peut comprendre des données aéronautiques comme des aéroports et leurs pistes d'atterrissage ou/et des repères géographiques tels que des villes, des étendues d'eau (rivières, lacs, mers).

Le remplissage de l'image synthétique par des pixels opaques ou partiellement opaques est avantageusement supérieur à 50% de la surface totale de l'image.

Dans l'exemple représenté sur la figure 1, l'aéronef 10 comporte en outre un ensemble de génération 40 d'images réelles à l'avant de l'aéronef.

Cet ensemble de génération 40 comporte au moins un capteur 50 de mesure, tel qu'une caméra 51 et un module 52 de génération d'images réelles raccordé au capteur 50.

En variante, l'ensemble 40 comporte une pluralité de capteurs 50 fonctionnant à des longueurs d'onde différentes.

Le capteur 50 est par exemple une caméra visible ou infrarouge ou une caméra dans le domaine millimétrique qui est montée dans le nez de l'aéronef 12 ou au voisinage du nez.

L'ensemble de génération d'images réelles 40 est calibré pour observer l'espace situé à l'avant de l'aéronef dans un champ de vision correspondant de préférence au volume d'observation 44A. Il est propre à mesurer et à fournir dynamiquement au module 52 des données d'images ponctuelles observées à une résolution donnée dans son champ de vision.

Le module 52 est propre à traiter dynamiquement les données ponctuelles d'image reçues du ou de chaque capteur 50 pour former à chaque instant une image réelle, obtenue à partir des données d'image détectées par le ou chaque capteur 50, pour son affichage sur l'afficheur 36.

L'ensemble 42 de gestion de l'interface comporte par exemple un processeur 54 et un mémoire 56. Il comporte des moyens 58 de gestion d'affichage d'images sur l'afficheur 36.

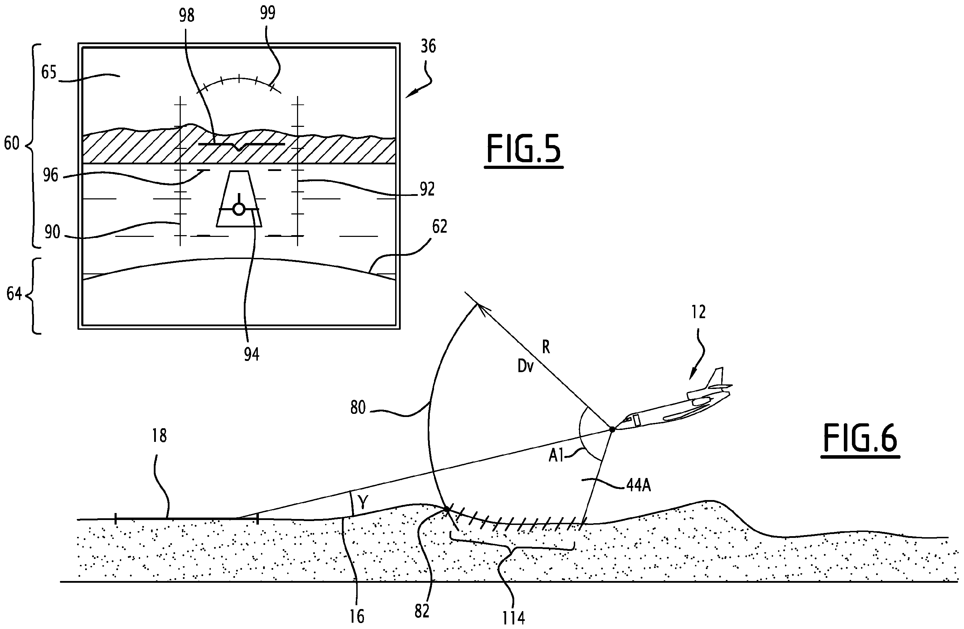

En référence à la figure 5, les moyens de gestion 58 sont propres à afficher dynamiquement, dans une première région 60 de l'afficheur 36, une image synthétique provenant de l'ensemble de génération d'images synthétiques 38, la première région 60 étant délimitée par un bord 62. L'image synthétique comprend au moins une représentation synthétique surfacique du terrain 16.

Les moyens de gestion 58 sont en outre propres à maintenir, au moins dans certaines configurations d'évolution de l'aéronef (voir figures 5 et 7), une deuxième région 64 de l'afficheur 36 dépourvue de représentation synthétique surfacique du terrain 16, la deuxième région 64 étant délimitée par le bord 62.

Selon l'invention, l'ensemble de gestion 42 comporte en outre des moyens 70 de délimitation dynamique du bord 62 de la première région 60, en fonction d'une distance de visibilité $D_V$ déterminée.

La distance de visibilité $D_V$ est avantageusement fonction de la distance $D_0$ à laquelle l'oeil du pilote ou l'ensemble de génération d'images réelles 40 est apte à fournir une information exploitable en observation réelle.

Selon l'invention, cette distance de visibilité $D_V$ est réglée par l'utilisateur, ou est obtenue automatiquement par l'ensemble de gestion 42.

Dans un mode de réalisation, aucune image ou représentation surfacique synthétique du terrain 16 n'est affichée dans la deuxième région 64. Le pilote peut alors observer par transparence à travers l'afficheur 36 l'espace situé à l'avant de l'aéronef dans la deuxième région 64.

Dans une variante, les moyens de commande 58 de l'affichage sont propres à afficher dynamiquement, dans la deuxième région 64, une image réelle obtenue à partir de l'ensemble de génération d'images réelles 40.

Dans l'exemple représenté sur les figures, la deuxième région 64 est apte à être affichée par les moyens de gestion 58 au dessous de la première région 60. Le bord 62 forme alors un bord inférieur de la première région 60 qui s'étend à travers l'afficheur 36.

Dans une première configuration d'affichage représentée sur la figure 3, le bord 62 est situé en bas de l'afficheur 36. La première région 60 recouvre alors tout l'afficheur 36. Aucune deuxième région 64 n'est alors présente sous la première région 60.

Dans une deuxième configuration d'affichage représentée sur la figure 5, le bord 62 s'est déplacé vers le haut sur l'afficheur 36, à la manière d'un rideau mobile et la deuxième région 64 est située en dessous de la première région 60.

En référence aux figures 4, 6, et 8, les moyens de délimitation dynamique 70 du bord 62 comportent par exemple des moyens 70A de détermination de l'intersection 82 entre une sphère 80 centrée sur l'aéronef 12, de rayon égal ou fonction de la distance de visibilité $D_V$, et le terrain 16 situé en regard de l'aéronef.

Les moyens de délimitation 70 comportent en outre des moyens 70B de calcul de la position du bord 62 sur l'afficheur 36 en fonction de l'intersection 82 déterminée.

Ces moyens 70B sont propres à convertir une position topographique calculée de l'intersection 82 en une position d'affichage du bord 62 sur l'afficheur 36.

Avantageusement, l'ensemble de gestion 42 comporte en outre des moyens 72 de commande d'affichage de symboles représentatifs de paramètres de vol, en superposition sur la première région 60 et/ou sur la deuxième région 62.

Les moyens de commande 72 sont par exemple propres à afficher des informations alphanumériques, des informations analogiques comme des échelles, ou/et des commandes à actionner par l'utilisateur.

Ces symboles sont par exemple représentatifs d'au moins un des paramètres suivants : indicateur d'altitude, indicateur de situation horizontale, vitesse air, altitude, vitesse verticale, vitesse air corrigée, information moteur, conformation de sustentation de l'aéronef, etc.

Dans l'exemple représenté sur la figure 3, les moyens de commande 72 sont propres à afficher sur l'afficheur 36, indépendamment du positionnement des régions 60, 64 une échelle de vitesse 90, une échelle d'altitude 92, un symbole 94 ou maquette représentatif de la position de l'aéronef 12 et de son assiette longitudinale, une échelle 96 d'assiette longitudinale, un indicateur d'assiette longitudinale nulle 98, et un indicateur de cap 99.

L'interface homme/machine 44 comporte un premier organe 100 de réglage de la distance de visibilité $D_V$ choisie. Avantageusement, elle comporte en outre un organe 102 de réglage de la luminosité de l'affichage de l'image synthétique et éventuellement la luminosité de l'image réelle affichées respectivement dans la première région 60 et la deuxième région 64.

Le premier organe de réglage 100 est par exemple formé par un organe de manoeuvre présent dans le cockpit 14, tel qu'un bouton ou une molette. En variante, l'organe de réglage 100 est formé par une interface logicielle de sélection d'une distance de visibilité affichable sur un écran, et pilotable par un clavier ou/et une souris.

La distance de visibilité $D_V$ est alors réglée manuellement, par action sur l'organe de réglage 100.

Cette distance de visibilité $D_V$ peut être choisie par rapport à une distance réelle $D_0$ observée ou estimée par le pilote de l'aéronef 12, par une distance de visibilité mesurée au sol et transmise à l'aéronef 12 par le système de communication 32, ou par tout autre moyen.

La distance de visibilité est par exemple choisie entre 60 m et 80 km.

Dans l'exemple représenté sur la figure 6, la distance de visibilité $D_V$ est calculée par rapport à l'aéronef 12, suivant l'axe et l'assiette longitudinale de l'aéronef 12.

La distance de visibilité $D_V$ utilisée par le système 10 peut être un multiple k de la distance réelle $D_0$ observée ou estimée par le pilote de l'aéronef 12 ou mesurée au sol.

La distance de visibilité déterminée $D_V$ est calculée par exemple par l'équation :

$$D_V = k \cdot D_0,$$

où k est par exemple compris entre 0,8 et 2. En particulier, lorsqu'un ensemble de génération d'images réelles 40 est utilisé pour former l'image réelle présentée dans la deuxième région 64, k peut être strictement supérieur à 1. La distance $D_V$ permet donc de tenir compte de la résolution des capteurs 50, qui peut être supérieure à celle d'un oeil humain.

Le deuxième organe de réglage 102 est propre à régler l'opacité de l'image affichée dans la première région 60 et/ou dans la deuxième région 64. Cette commande est par exemple un bouton ou une molette présente sur la planche de bord du cockpit 14.

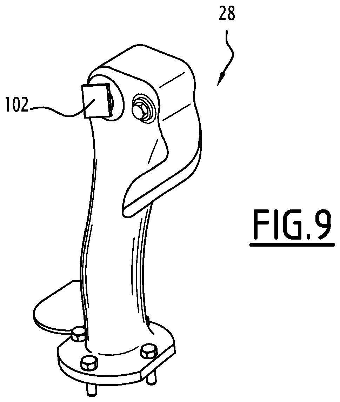

Dans une variante avantageuse représentée sur la figure 9, le deuxième organe de réglage 102 est monté sur l'organe de commande de vol 28, servant à manoeuvrer l'aéronef 12.

Ainsi, la luminosité ou l'opacité de l'image est ajustable par le pilote via une commande en temps réel. Cette commande, située sur le manche ou la manette constituant l'organe de commande 28 permet d'ajuster l'opacité de l'image à tout moment, en particulier durant les phases critiques de vol où les mains doivent rester sur l'organe de commande 28. La luminosité de l'écran est ainsi choisie, de sorte que l'affichage n'interfère pas avec la vision du monde extérieur.

Ceci est le cas en particulier à la fin de l'approche, pour privilégier la vision naturelle par rapport à l'image synthétique, et par rapport à l'image réelle obtenue de l'ensemble 40.

Dans une autre variante, l'organe de réglage 102 est formé par une interface logicielle de sélection affichable sur un écran et pilotable par un clavier ou/et une souris.

Un premier procédé de visualisation selon l'invention va maintenant être décrit, en référence à l'approche d'un aéronef 12 vers une piste d'atterrissage 18 localisée sur un terrain 16.

Initialement, lorsque le système 10 est activé, les dimensions de l'afficheur 36 correspondent au volume d'observation 44A dans l'espace situé à l'avant de l'aéronef 12, défini précédemment.

A chaque instant T de mise à jour de l'affichage du système 10, par exemple à une fréquence supérieure à 5 Hz et comprise entre 5 Hz et 60 Hz, les moyens de délimitation 70 déterminent la position du bord 62 de la première région 60.

A cet effet, les moyens de calcul 70A déterminent à chaque instant T la position courante de l'aéronef 12 sur la base des données reçues du système de positionnement 30. Les moyens de calcul 70A déterminent ensuite la configuration topographique du terrain 16 situé à l'avant de l'aéronef et notamment le relief présent sur ce terrain. Puis, les moyens de calcul 70A relèvent l'intersection 82 entre une sphère 80 centrée sur le cockpit 14 de l'aéronef 12, de rayon égal à la distance de visibilité $D_V$ ou fonction de celle-ci, et le terrain 16, tel qu'il est déterminé par sa configuration topographique.

Avantageusement, le rayon $D_V$ de la sphère 80 est choisi égal à $k.D_0$, où k est un facteur de proportionnalité choisi entre 0,8 et 2, et $D_0$ est une estimation d'une distance de visibilité réelle, observable sur le terrain. Le facteur k est notamment choisi strictement supérieur à 1, lorsqu'une image réelle provenant d'un ensemble de génération d'images réelles 40 est affichée dans la deuxième région 64 pour tenir compte de la résolution améliorée de cet ensemble de génération d'images réelles 40 par rapport à une visibilité à l'oeil nu.

Dans la première configuration d'évolution de l'aéronef représentée sur la figure 4, l'intersection entre la sphère 80 et le terrain 16 est nulle ou est située en dehors du volume d'observation 44A.

Dans ce cas, les moyens de détermination 70 de la position du bord 62 placent le bord 62 le long du bord inférieur de l'afficheur 36 pour définir une première région 60 qui occupe sensiblement totalement l'afficheur 36 (figure 3).

Simultanément, l'ensemble de génération 38 d'images synthétiques, engendre dynamiquement à chaque instant T, une image synthétique en fonction de la position actuelle de l'aéronef, telle que déterminée par le système de positionnement 30.

Comme illustré par la figure 3, les moyens de gestion 58 recueillent l'image synthétique engendrée par l'ensemble de génération 38 d'images synthétiques, et affichent ainsi sur sensiblement toute la région de l'afficheur 36 dans laquelle le terrain 16 est observable, cette image synthétique représentative du terrain situé à l'avant de l'aéronef 12.

L'image synthétique ainsi affichée comporte au moins une représentation synthétique surfacique du terrain 16.

Avantageusement, les moyens de commande 72 affichent les différents symboles 90 à 99 en superposition de l'image synthétique.

Dans cet exemple, l'image synthétique comprend en outre une représentation symbolique de la piste 18 sous forme d'un quadrilatère entourant la piste, à la position déterminée supposée de cette piste 18 sur le terrain 16.

Puis, dans la configuration de la figure 6, lorsque l'aéronef 12 se rapproche du terrain 16, l'intersection 82 entre la sphère 80 et le terrain entre dans le volume d'observation 44A. La partie 114 du terrain 16 située dans le volume d'observation 44A à l'arrière de l'intersection 82 définit une zone potentiellement visible à l'oeil nu ou par un ensemble de génération d'images réelles 40, puisque cette partie 114 est située à une distance inférieure à la distance de visibilité $D_V$ estimée ou réelle (lorsque cette distance est corrigée par un facteur k).

Sur la base de la position topographique dynamique de l'intersection 82, les moyens de calcul 70B calculent la position correspondante de cette intersection sur l'afficheur 36 en fonction de l'orientation du champ de vision défini par l'afficheur.

La position du bord 62 est ensuite calculée à partir de la position de l'intersection sur l'afficheur 36. La position de l'intersection et la position du bord 62 peuvent être au moins partiellement égales, notamment dans les zones de l'intersection qui ne sont pas masquées par un relief du terrain 16, en observant depuis le cockpit 14.

Il est possible dans certains cas de corriger la position du bord 62 en fonction du relief présent sur le terrain 16 à l'avant de l'aéronef 12.

Avantageusement, différentes intersections sont calculées pour chaque colonne de l'afficheur 36 correspondant à une tranche verticale dans le volume d'observation 44A. Ceci permet de déterminer la distance minimale sur chaque colonne à laquelle l'intersection se trouve, et éventuellement de corriger la position du bord 62 en fonction de ce calcul.

D'autres corrections de la position du bord 62 peuvent être appliquées par les moyens de calcul 70B, comme par exemple un lissage, le calcul d'une moyenne glissante de positions du bord, etc.

Une fois obtenue à chaque instant T la position dynamique du bord 62 sur l'afficheur 36 en fonction de la distance de visibilité $D_V$, les moyens de gestion 58 de l'affichage affichent dans la première région 60 située au dessus du bord 62, l'image synthétique provenant de l'ensemble de génération d'images synthétiques 38. Cette image synthétique comporte au moins une représentation synthétique surfacique du terrain 16.

Par ailleurs, les moyens de gestion 58 maintiennent la deuxième région 64 située au dessous du bord 62 sans représentation synthétique surfacique du terrain 16.

Par exemple, l'image synthétique complète générée par l'ensemble de génération 38 est tronquée par les moyens de gestion 58 pour n'être affichée qu'au dessus du bord 62 déterminé dynamiquement.

Dans un mode de réalisation, aucune image réelle n'est affichée sur l'afficheur 36.

Le pilote de l'aéronef est apte à observer l'espace et le terrain 16 situés en regard de la deuxième région 64 par transparence à travers l'afficheur 36.

Dans une variante, l'ensemble de génération d'images réelles 40 relève à chaque instant une pluralité de données d'images dans le volume d'observation 44A. Le module 52 engendre alors une image réelle à partir des données d'images de l'ensemble 40.

Cette image réelle provenant de l'ensemble de génération d'images réelles 40 est affichée dans la deuxième région 64 jusqu'au bord 62.

Avantageusement, l'image réelle obtenue à partir de l'ensemble de génération 40 est tronquée pour n'être affichée que dans la deuxième région 64 jusqu'au bord 62. Dans ce cas, la première région 60 est dépourvue d'affichage d'images réelles engendrées par l'ensemble de génération 40.

En variante, les images réelles engendrées par l'ensemble de génération 40 sont affichées à la fois dans la première région 60 et dans la deuxième région 64, les images synthétiques étant affichées en superposition sur les images réelles dans la première région 60.

Par ailleurs, une troisième région 65 située au-dessus de la première région 60, représentative du ciel présent au-dessus du terrain 16 peut être laissée transparente.

Grâce au système 10 selon l'invention, dans les régions où la visibilité est considérée comme étant de bonne qualité, le pilote accède donc directement sur l'afficheur 36 à une observation réelle du terrain situé en regard de l'aéronef 12, soit directement par transparence, soit au moyen d'une image réelle fournie par un ensemble de génération d'images réelles 40.

Par contre, dans l'espace qui est situé au-delà de la visibilité possible, le pilote dispose d'une image synthétique qui lui permet d'anticiper le relief présent dans cette région.

Les moyens de délimitation 70 déterminent dynamiquement, à tout instant, la position du bord 62 de la première région 60 en fonction de la distance de visibilité $D_V$, en utilisant avantageusement le calcul de l'intersection entre la sphère 80 et le terrain 16.

Au fur et à mesure de la descente de l'aéronef 12, et du rapprochement entre le terrain 16 et l'aéronef, une plus grande partie du terrain 16 passe en dessous de la distance de visibilité $D_V$. Par suite, le bord 62 se déplace vers le haut sur l'afficheur 36, compte tenu du rapprochement entre l'aéronef 12 et le terrain 16.

De ce fait, en référence à la figure 7, lorsque l'aéronef 12 arrive au voisinage de la piste d'atterrissage 18, la deuxième région 64 recouvre la piste d'atterrissage 18 et la zone avant contigüe à cette piste 18. Le pilote dispose alors d'une vision réelle de la piste d'atterrissage 18 et de ses rampes d'approches, cette image réelle étant obtenue par observation directe par transparence à travers l'afficheur 36, ou au moyen d'un ensemble de génération d'images réelles 40.

Par contre, les éléments de terrain 16 situés à l'arrière-plan, notamment le relief éloigné, sont représentés sous forme d'une image synthétique qui permet au pilote de se représenter l'environnement situé autour de l'aéronef 12, si des évènements imprévus lors de l'atterrissage se produisent, pouvant nécessiter une remise des gaz.

Grâce à la détermination dynamique de la position du bord 62 de la première région 60 dans laquelle une image synthétique est affichée sur l'afficheur 36 en fonction d'une distance de visibilité $D_V$, et grâce à l'absence d'affichage d'image synthétique dans la deuxième région 64 située sous le bord 62, le pilote dispose à tout instant des données les plus fiables et les plus précises pour estimer la situation spatiale du terrain situé en regard de l'aéronef 12.

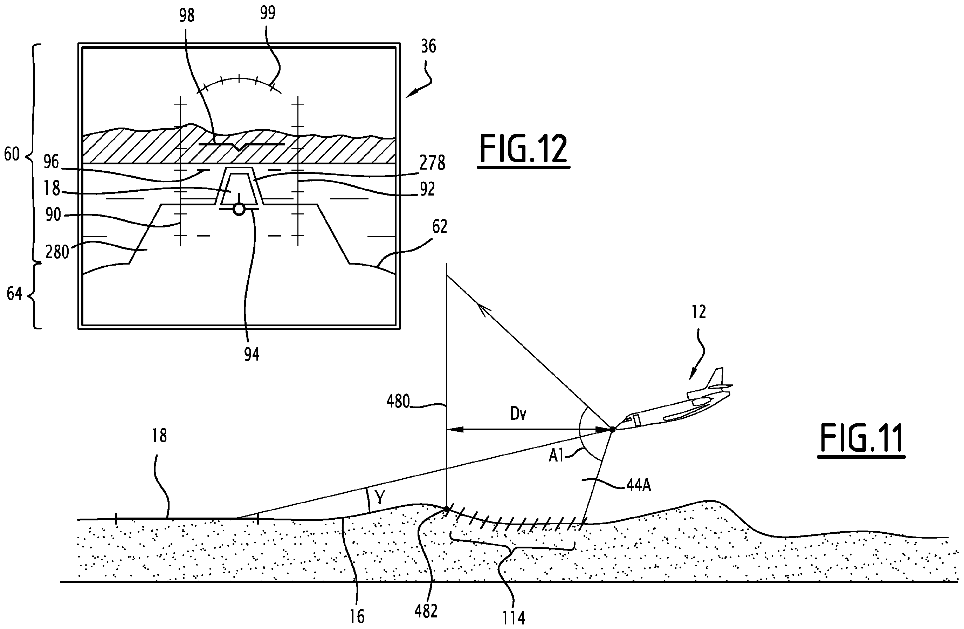

Dans la variante représentée sur la figure 11, la distance de visibilité $D_V$ est calculée horizontalement, sans tenir compte de l'assiette longitudinale de l'aéronef 12. La position du bord 62 est alors calculée sur la base de l'intersection 482 entre un plan vertical 480 situé horizontalement à une distance $D_V$ de l'aéronef 12 et le terrain 16.

Dans la variante représentée sur la figure 12, certains éléments particuliers situés dans la première région 60 peuvent être laissés sans affichage d'une représentation synthétique surfacique du terrain 16, en présentant éventuellement un affichage d'une image réelle.

Ces éléments particuliers sont par exemple, l'intérieur du symbole représentant de la piste 18, une zone périphérique 278 autour de la piste 18 et/ou une zone avant 280 située à l'avant de la piste, comme illustré par la figure 12.

Dans ce cas, la zone avant 280 peut présenter une largeur supérieure à celle de la zone périphérique 278 et de la piste 18, comme dans l'exemple représenté sur la figure 12.

A l'inverse, la deuxième région 64 peut comprendre une pluralité d'indicateurs synthétiques, tel que des points de repère, des lignes de terrain obtenues à partir de la base de données 45A. Cette région 64 est cependant dépourvue de représentation synthétique surfacique du terrain 16.

Dans une autre variante, l'opacité de l'image synthétique affichée dans la première région 60 est inférieure à 100%, et notamment comprise entre 1 % et 99 % pour permettre une observation partielle du terrain situé à l'arrière de l'afficheur 36.

Dans encore une autre variante, l'afficheur 36 du système de visualisation 10 selon l'invention est choisi parmi l'un ou plusieurs des écrans tête basse 24A à 24D. Dans ce cas, l'ensemble de gestion 42 affiche dans la deuxième région 64 une image réelle fournie par l'ensemble de génération d'images réelles 40.

Dans une autre variante, la distance de visibilité $D_V$ est déterminée automatiquement par le système 10 à l'aide d'un ensemble de détermination automatique de la distance de visibilité $D_V$.

L'ensemble de détermination est propre à analyser une image réelle obtenue à partir d'un ensemble de génération d'images réelles 40, par exemple par une caméra 51 pour définir jusqu'à quelle position sur l'image réelle une information utile peut être observée sur cette image réelle. En fonction de la position courante et de l'assiette longitudinale courante de l'aéronef 12, par exemple mesurée par un capteur de positionnement et en fonction des informations concernant le terrain 16, contenues dans une base de données 45A topographiques, une distance $D_V$ est calculée à chaque instant.

Dans une variante (non représentée), une zone intermédiaire de la première région 60 située au voisinage du bord 62, le long du bord 62, présente une intensité d'affichage pour la représentation synthétique, qui est croissante en se déplaçant à l'écart du bord 62. Cette zone intermédiaire, dans laquelle l'intensité de la représentation synthétique présente un dégradé en intensité améliore l'effet visuel présenté au pilote, entre une zone de la première région 60 présentant une intensité d'affichage maximale située à l'écart du bord 62 et le bord 62, à partir duquel l'intensité d'affichage est nulle.

**Revendications**

1. Système (10) de visualisation pour aéronef (12), comprenant :

   - un afficheur (36) ;
   - un ensemble (38) de génération dynamique d'images synthétiques, les images synthétiques comprenant au moins une représentation synthétique surfacique du terrain (16) situé en regard de l'aéronef (12) ;
   - un ensemble (42) de gestion de l'interface graphique de l'afficheur (36), propre à commander l'affichage dynamique, sur une première région (60) de l'afficheur, d'une image synthétique provenant de l'ensemble de génération d'images synthétiques (38), la première région (60) étant délimitée par un bord (62) et située au-dessus du bord (62), l'ensemble de gestion (42) étant propre à maintenir, dans certaines configurations d'évolution de l'aéronef, une deuxième région (64) de l'afficheur délimitée par le bord (62) et située en-dessous du bord (62) sensiblement dépourvue de représentation synthétique surfacique du terrain (16) ;

   l'ensemble de gestion (42) comportant des moyens (70) de délimitation dynamique du bord (62) de la première région (60), les moyens de délimitation (70) étant configurés pour calculer dynamiquement la position du bord (62) de la première région (60) sur l'afficheur (36) en fonction d'une distance de visibilité ($D_V$) déterminée, prise par rapport à l'aéronef (12).

2. Système (10) selon la revendication 1, **caractérisé en ce que** l'ensemble de gestion (42) est propre à commander l'affichage de la première région (60) au dessus de la deuxième région (64), le bord (62) de la première région (60) délimitant vers le bas la première région (60).

3. Système (10) selon l'une quelconque des revendications précédentes, **caractérisé en ce qu'**il comprend un ensemble (40) de génération d'images réelles du terrain (16) situé en regard de l'aéronef (12), comprenant au moins un capteur de détection (50), l'ensemble de gestion (42) étant propre à commander l'affichage dynamique, dans la deuxième région (64), d'une image réelle du terrain (16) situé en regard de l'aéronef (12), simultanément avec l'affichage d'une image synthétique dans la première région (60).

4. Système (10) selon la revendication 3, **caractérisé en ce que** l'ensemble de gestion (42) est propre à maintenir la première région (60) de l'afficheur (36) dépourvue d'images réelles engendrées par l'ensemble de génération d'images réelles (40).

5. Système (10) selon l'une quelconque des revendications précédentes, **caractérisé en ce qu'**il comporte un organe (100) de réglage manuel de la distance de visibilité ($D_V$) déterminée, propre à être actionné par un utilisateur du système de visualisation (10).

6. Système (10) selon l'une quelconque des revendications précédentes, **caractérisé en ce qu'**il comporte un ensemble de détermination automatique de la distance de visibilité ($D_V$) déterminée.

7. Système (10) selon la revendication 6, **caractérisé en ce que** l'ensemble de détermination automatique comporte des moyens d'analyse d'une image réelle obtenue à partir de l'aéronef (12) pour définir jusqu'à quelle position une information utile peut être observée sur l'image réelle, et des moyens de calcul de la distance de visibilité déterminée en fonction de la position de l'information utile sur l'image réelle, de la position de l'aéronef (12), et d'une base de données topographique (45B) contenant des informations concernant le terrain (16).

8. Système (10) selon l'une quelconque des revendications précédentes, **caractérisé en ce que** les moyens de délimitation (70) comportent :

- des moyens (70A) de calcul de l'intersection (82) entre une sphère (80) de rayon égale ou fonction de la distance de visibilité ($D_V$) déterminée, et le terrain (16) situé en regard de l'aéronef (12), ou entre un plan (480) situé horizontalement à une distance égale ou fonction de la distance de visibilité ($D_V$) déterminée et le terrain (16) situé en regard de l'aéronef (12) ;
- des moyens (70B) de calcul de la position du bord (62) de la première région (60) sur l'afficheur en fonction de l'intersection (82) déterminée par les moyens de calcul (70A) de l'intersection.

9. Système (10) selon l'une quelconque des revendications précédentes, **caractérisé en ce que** l'ensemble de gestion (42) est propre à basculer entre une première configuration dans laquelle il commande l'affichage de la première région (60) comprenant une image synthétique sur sensiblement la totalité de l'afficheur (36), et une deuxième configuration dans laquelle il commande l'affichage de la première région (60) comprenant l'image synthétique pour occuper une première partie de l'afficheur (36), la deuxième région (64) sensiblement dépourvue de représentation synthétique surfacique du terrain (16) occupant une deuxième partie de l'afficheur (36).

10. Système (10) selon l'une quelconque des revendications précédentes, **caractérisé en ce que** l'afficheur (36) est un afficheur au moins partiellement transparent (26), tel qu'un écran semi-transparent placé devant un pare-brise du cockpit, un système de projection d'images sur le pare-brise du cockpit, un pare-soleil semi-transparent, un viseur de casque, une lunette semi-transparente proche de l'oeil.

11. Système (10) selon la revendication 10, **caractérisé en ce qu'**il comporte un organe (102) de réglage de l'opacité de l'afficheur (26), avantageusement situé sur une manette de commande de l'aéronef, telle que le manche ou la manette des gaz.

12. Procédé de visualisation dans un aéronef (12), comprenant les étapes suivantes :

- fourniture d'un système de visualisation (10) selon l'une quelconque des revendications précédentes ;
- dans au moins une configuration d'évolution de l'aéronef, affichage dynamique par l'ensemble de gestion (42) d'une image synthétique provenant de l'ensemble de génération d'images synthétiques (38) sur une première région (60) de l'afficheur (36), la première région (60) étant délimitée par un bord (62), une deuxième région (64) de l'afficheur délimitée par le bord (62) étant sensiblement dépourvue de représentation synthétique surfacique du terrain ;
- délimitation dynamique de la position du bord (62) de la première région (60) en fonction d'une distance de visibilité ($D_V$) déterminée, prise par rapport à l'aéronef (12).

13. Procédé selon la revendication 12, **caractérisé en ce qu'**il comporte une étape de prise de données d'image réelle par un ensemble de génération d'images réelles (40), puis une étape de génération d'une image réelle à partir des données d'image prises par l'ensemble de génération d'images réelles (40), le procédé comportant l'affichage dynamique, par l'ensemble de gestion (42), d'une image réelle obtenue à partir des données d'image de l'ensemble de génération d'images réelles (40) dans la deuxième région (64).

14. Procédé selon la revendication 13, **caractérisé en ce que**, lors de l'étape d'affichage dynamique d'une image réelle dans la deuxième région (64), l'ensemble de gestion (42) maintient la première région (60) de l'afficheur (36) dépourvue d'images réelles engendrées par l'ensemble de génération d'images réelles (40).

15. Procédé selon l'une quelconque des revendications 12 à 14, **caractérisé en ce que** la délimitation de la position du bord (62) de la première région (60) comporte le calcul de l'intersection (82) entre une sphère (80) de rayon égale ou fonction de la distance de visibilité ($D_V$) et le terrain (16) ou entre un plan (480) situé horizontalement à une distance égale ou fonction de la distance de visibilité ($D_V$) déterminée et le terrain (16), puis le calcul de la position du bord (62) sur l'afficheur en fonction de l'intersection (82) déterminée à l'étape de calcul de l'intersection (82).

**Patentansprüche**

1. System (10) zur Visualisierung für ein Luftfahrzeug (12), aufweisend:

- eine Anzeigeeinrichtung (36),
- eine Einrichtung (38) zur dynamischen Erzeugung synthetischer Bilder, wobei die synthetischen Bilder wenigstens eine synthetische Oberflächendarstellung des Geländes (16), das dem Luftfahrzeug (12) gegenüberliegt, aufweisen,
- eine Einrichtung (42) zur Steuerung der grafischen Schnittstelle der Anzeigeeinrichtung (36), die in der Lage ist, die dynamische Anzeige, in einem ersten Bereich (60) der Anzeigeeinrichtung, eines synthetischen Bildes zu befehlen, das von der Einrichtung zur Erzeugung synthetischer Bilder (38) stammt, wobei der erste Bereich (60) von einem Rand (62) begrenzt ist und über dem Rand (62) angeordnet ist, wobei die Einrichtung zur Steuerung (42) in der Lage ist, in bestimmten Entwicklungs-Konfigurationen des Luftfahrzeugs, einen zweiten Bereich (64) der Anzeigeeinrichtung, der von dem Rand (62) begrenzt ist und der unter dem Rand (62) angeordnet ist, im Wesentlichen frei von der synthetischen Oberflächendarstellung des Geländes (16) aufrechtzuerhalten,

wobei die Einrichtung zur Steuerung (42) Mittel (70) zur dynamischen Begrenzung des Rands (62) des ersten Bereichs (60) aufweist, wobei die Mittel zur Begrenzung (70) eingerichtet sind zum dynamischen Berechnen der Position des Rands (62) des ersten Bereichs (60) auf der Anzeigeeinrichtung (36) in Abhängigkeit von einer bestimmten Sichtweitedistanz ($D_V$), die von dem Luftfahrzeug aus genommen ist.

2. System (10) gemäß Anspruch 1, **dadurch gekennzeichnet, dass** die Einrichtung zur Steuerung (42) in der Lage ist, die Anzeige des ersten Bereichs (60) auf über den zweiten Bereich (64) zu befehlen, wobei der Rand (62) des ersten Bereichs (60) den ersten Bereich (60) nach unten hin begrenzt.

3. System (10) gemäß irgendeinem der vorhergehenden Ansprüche, **dadurch gekennzeichnet, dass** es aufweist eine Einrichtung (40) zur Erzeugung reeller Bilder des Geländes (16), das dem Luftfahrzeug (12) gegenüberliegt, aufweisend wenigstens einen Erfassungssensor (50), wobei die Einrichtung zur Steuerung (42) in der Lage ist, die dynamische Anzeige, in dem zweiten Bereich (64), eines reellen Bildes des Geländes (16), das dem Luftfahrzeug (12) gegenüberliegt, zu befehlen simultan mit der Anzeige eines synthetischen Bildes in dem ersten Bereich (60).

4. System (10) gemäß Anspruch 3, **dadurch gekennzeichnet, dass** die Einrichtung zur Steuerung (42) in der Lage ist, den ersten Bereich (60) der Anzeigeeinrichtung (36) frei von reellen Bildern aufrechtzuerhalten, die von der Einrichtung zur Erzeugung reeller Bilder (40) generiert werden.

5. System (10) gemäß irgendeinem der vorhergehenden Ansprüche, **dadurch gekennzeichnet, dass** es aufweist ein Organ (100) zur manuellen Einstellung der bestimmten Sichtweitedistanz ($D_V$), das in der Lage ist, um von einem Bediener des Systems zur Visualisierung (10) betätigt zu werden.

6. System (10) gemäß irgendeinem der vorhergehenden Ansprüche, **dadurch gekennzeichnet, dass** es aufweist eine Einrichtung zur automatischen Ermittlung der bestimmten Sichtweitedistanz ($D_V$).

7. System (10) gemäß Anspruch 6, **dadurch gekennzeichnet, dass** die Einrichtung zur automatischen Ermittlung aufweist Mittel zur Analyse eines reellen Bildes, das von dem Luftfahrzeug (12) ausgehend erlangt ist, zum Definieren bis zu welcher Position eine Nutzinformation auf dem reellen Bild beobachtet werden kann, und Mittel zur Berechnung der bestimmten Sichtweitedistanz in Abhängigkeit von der Position der Nutzinformation auf dem reellen Bild, der Position des Luftfahrzeugs (12) und einer Grundlage von topografischen Daten (45B), die Informationen bezüglich des Geländes (16) enthalten.

8. System (10) gemäß irgendeinem der vorhergehenden Ansprüche, **dadurch gekennzeichnet, dass** die Mittel zur Begrenzung (70) aufweisen:

   - Mittel (70A) zur Berechnung der Überschneidung (82) zwischen einer Sphäre (80) mit einem Radius gleich der oder in Abhängigkeit von der bestimmten Sichtweitedistanz ($D_V$) und dem Gelände (16), das dem Luftfahrzeug (12) gegenüberliegt, oder zwischen einer Ebene (480), die horizontal in einem Abstand gleich der oder in Abhängigkeit von der bestimmten Sichtweitedistanz ($D_V$) angeordnet ist, und dem Gelände (16), das dem Luftfahrzeug (12) gegenüberliegt,
   - Mittel (70B) zur Berechnung der Position des Rands (62) des ersten Bereichs (60) auf der Anzeigeeinrichtung in Abhängigkeit von der Überschneidung (82), die von den Mitteln zur Berechnung (70A) der Überschneidung ermittelt ist.

9. System (10) gemäß irgendeinem der vorhergehenden Ansprüche, **dadurch gekennzeichnet, dass** die Einrichtung zur Steuerung (42) in der Lage ist, umzuschalten zwischen einer ersten Konfiguration, in welcher sie die Anzeige des ersten Bereichs (60), der ein synthetisches Bild aufweist, auf im Wesentlichen die Gesamtheit der Anzeigeeinrichtung (36) befiehlt, und einer zweiten Konfiguration, in welcher sie die Anzeige des ersten Bereichs (60), welcher das synthetische Bild aufweist, zum Einnehmen eines ersten Teils der Anzeigeeinrichtung (36) befiehlt, wobei der zweite Bereich (64), der im Wesentlichen frei von der synthetischen Oberflächendarstellung des Geländes (16) ist, einen zweiten Teil der Anzeigeeinrichtung (36) einnimmt.

10. System (10) gemäß irgendeinem der vorhergehenden Ansprüche, **dadurch gekennzeichnet, dass** die Anzeigeeinrichtung (36) eine zumindest teilweise transparente Anzeigeeinrichtung (26) ist, wie ein semi-transparenter Bildschirm, der vor einer Frontscheibe des Cockpits platziert ist, ein System zur Projektion von Bildern auf die Frontscheibe des Cockpits, eine semi-transparente Sonnenblende, ein Helmvisier, ein semitransparentes Augenglas nahe dem Auge.

11. System (10) gemäß Anspruch 10, **dadurch gekennzeichnet, dass** es aufweist ein Organ (102) zur Einstellung der Intransparenz der Anzeigeeinrichtung (26), vorteilhafterweise angeordnet an einem Bedienhebel des Luftfahrzeugs, wie dem Steuerhebel oder dem Gashebel.

12. Verfahren zur Visualisierung in einem Luftfahrzeug (12), aufweisend die folgenden Schritte:

- Bereitstellen eines System zur Visualisierung (10) gemäß irgendeinem der vorhergehenden Ansprüche,
- in Wenigstens einer Entwicklungs-Konfiguration des Luftfahrzeugs, dynamisches Anzeigen durch die Einrichtung zur Steuerung (42) eines synthetischen Bildes, das von der Einrichtung zur Erzeugung synthetischer Bilder (38) stammt, in einem ersten Bereich (60) der Anzeigeeinrichtung (36), wobei der erste Bereich (60) von einem Rand (62) begrenzt ist, wobei ein zweiter Bereich (64) der Anzeigeeinrichtung, der von dem Rand (62) begrenzt ist, im Wesentlichen frei von einer synthetischen Oberflächendarstellung des Geländes ist,
- dynamisches Begrenzen der Position des Rands (62) des ersten Bereichs (60) in Abhängigkeit von einer bestimmten Sichtweitedistanz ($D_V$), die von dem Luftfahrzeug (12) aus genommen ist.

13. Verfahren gemäß Anspruch 12, **dadurch gekennzeichnet, dass** es aufweist einen Schritt des Aufnehmens von Daten eines reellen Bildes durch eine Einrichtung zur Erzeugung reeller Bilder (40), danach einen Schritt des Erzeugens eines reellen Bildes ausgehend von den Bilddaten, die aufgenommen sind durch die Einrichtung zur Erzeugung reeller Bilder (40), wobei das Verfahren aufweist das dynamische Anzeigen, durch die Einrichtung zur Steuerung (42), eines reellen Bildes, das ausgehend von den Bilddaten der Einrichtung zur Erzeugung reeller Bilder (40) erlangt ist, in dem zweiten Bereich (64).

14. Verfahren gemäß Anspruch 13, **dadurch gekennzeichnet, dass**, während des Schritts des dynamischen Anzeigens eines reellen Bildes in dem zweiten Bereich (64), die Einrichtung zur Steuerung (42) den ersten Bereich (60) der Anzeigeeinrichtung (36) frei von reellen Bildern aufrechterhält, die von der Einrichtung zur Erzeugung reeller Bilder (40) stammen.

15. Verfahren gemäß irgendeinem der Ansprüche 12 bis 14, **dadurch gekennzeichnet, dass** die Begrenzung der Position des Rands (62) des ersten Bereichs (60) aufweist das Berechnen der Überschneidung (82) zwischen einer Sphäre (80) mit einem Radius gleich der oder in Abhängigkeit von der Sichtweitedistanz ($D_V$) und dem Gelände (16), oder zwischen einer Ebene (480), die horizontal in einem Abstand gleich der oder in Abhängigkeit von der bestimmten Sichtweitedistanz ($D_V$) angeordnet ist, und dem Gelände (16), dann das Berechnen der Position des Rands (62) auf der Anzeigeeinrichtung in Abhängigkeit von der Überschneidung (82), die im Schritt des Berechnens der Überschneidung (82) ermittelt wurde.

## Claims

1. A vision system (10) for an aircraft (12), comprising:

- a display (36);
- an assembly (38) for dynamically generating synthetic images, the synthetic images comprising at least one synthetic surface representation of the terrain (16) situated facing the aircraft (12);
- a graphic interface management assembly (42) for the display (36), capable of controlling the dynamic display, on a first region (60) of the display, of a synthetic image coming from the synthetic image generating assembly (38), the first region (60) being delimited by an edge (62) and located above the edge (62), the management assembly (42) being capable of maintaining, in certain movement configurations of the aircraft, a second region (64) of the display delimited by the edge (62) and located below the edge (62) substantially with no synthetic surface representation of the terrain (16);

the management assembly (42) including means (70) for dynamically delimiting the edge (62) of the first region (60), the delimiting means (70) being configured to compute the position of the edge (62) of the first region (60) on the display (36) dynamically as a function of a determined visibility distance ($D_V$), taken relative to the aircraft (12).

2. The system (10) according to claim 1, **characterized in that** the management assembly (42) is able to control the display of the first region (60) to be located above the second region (64), the edge (62) of the first region (60) downwardly delimiting the first region (60).

3. The system (10) according to any one of the preceding claims, **characterized in that** it comprises an assembly (40) for generating real images of the terrain (16) situated facing the aircraft (12), comprising at least one detection sensor (50), the management assembly (42) being capable of controlling the dynamic display, in the second region (64), of a real image of the terrain (16) situated facing the aircraft (12), simultaneously with the display of a synthetic image in the first region (60).

4. The system (10) according to claim 3, **characterized in that** the management assembly (42) is capable of maintaining the first region (60) of the display (36) with no real images generated by the real image generating assembly (40).

5. The system (10) according to any one of the preceding claims, **characterized in that** it includes a member (100) for manually adjusting the determined visibility distance ($D_V$), capable of being actuated by a user of the vision systems (10).

6. The system (10) according to any one of the preceding claims, **characterized in that** it includes an assembly for automatically determining the determined visibility distance ($D_V$).

7. The system (10) according to claim 6, **characterized in that** the automatic determination assembly includes means for analyzing a real image obtained from the aircraft (12) to define the position to which useful information can be observed on the real image, and means for computing the determined visibility distance, as a function of the position of the useful information on the real image, of the position of the aircraft (12), and a topographical database (45B) containing information regarding the terrain (16).

8. The system (10) according to any one of the preceding claims, **characterized in that** the delimiting means (70) include:

   - means (70A) for computing the intersection (82) between a sphere (80) of equal radius or function of on the determined visibility difference ($D_V$), and the terrain (16) situated facing the aircraft (12), or between a plane (480) situated horizontally at an equal distance or depending on the determined visibility distance ($D_V$) and the terrain (16) situated facing the aircraft (12);
   - means (70B) for computing the position of the edge (62) of the first region (60) on the display as a function of the intersection (82) determined by the intersection computation means (70A).

9. The system (10) according to any one of the preceding claims, **characterized in that** the management assembly (42) is capable of switching between a first configuration, in which it controls the display of the first region (60) comprising a synthetic image over substantially all of the display (36), and a second configuration, in which it controls the display of the first region (60) comprising the synthetic image to occupy a first part of the display (36), the second region (64) substantially having no synthetic surface representation of the terrain (16) occupying a second part of the display (36).

10. The system (10) according to any one of the preceding claims, **characterized in that** the display (36) is an at least partially transparent display (26), such as a semitransparent screen placed in front of the windshield of the cockpit, a system for projecting images on the windshield of the cockpit, a semitransparent sunshade, a helmet visor or semitransparent lens close to the eye.

11. The system (10) according to claim 10, **characterized in that** it includes a member (102) for adjusting the opaqueness of the display (26), advantageously situated on a control lever of the aircraft, such as the control stick or the throttle.

12. A vision method in an aircraft (12), comprising the following steps:

   - providing a vision system (10) according to any one of the preceding claims;
   - in at least one movement configuration of the aircraft, dynamic displaying, using the management assembly (42), of a synthetic image coming from the synthetic image generating assembly (38) on a first region (60) of the display (36), the first region (60) being delimited by an edge (62), a second region (64) of the display delimited by the edge (62) substantially having no synthetic surface representation of the terrain;
   - dynamically delimiting the position of the edge (62) of the first region (60) as a function of a determined visibility distance ($D_V$), taken relative to the aircraft (12).

13. The method according to claim 12, **characterized in that** it includes a step for acquiring real image data using a real image generating assembly (40), then a step for generating a real image from the image data taken by the real image generating assembly (40), the method including the dynamic display, by the management assembly (42), of a real image obtained from the image data from the real image generating assembly (40) in the second region (64).

14. The method according to claim 13, **characterized in that**, during the step for dynamically displaying a real image in the second region (64), the management assembly (42) maintains the first region (60) of the display (36) without any real images created by the real image generating assembly (40).

15. The method according to any one of claims 12 to 14, **characterized in that** the delimiting of the position of the edge (62) of the first region (60) includes computing the intersection (82) between a sphere (80) of equal radius or depending on the visibility distance ($D_V$) and the terrain (16) or between the plane (480) situated horizontally at an equal distance or depending on the determined visibility distance ($D_V$) and the terrain (16), then computing the position of the edge (62) on the display as a function of the intersection (82) determined in the step for computing the intersection (82).

EP 2 717 228 B1

FIG.1

FIG.2

FIG.10

FIG.4

FIG.3

FIG.5

FIG.6

EP 2 717 228 B1

FIG.7

FIG.8

EP 2 717 228 B1

28

102

FIG.9

FIG.12

FIG.11

EP 2 717 228 B1

**EP 2 717 228 B1**

## RÉFÉRENCES CITÉES DANS LA DESCRIPTION

**Documents brevets cités dans la description**

- WO 2011039666 A